**Europäisches Patentamt**

**European Patent Office**

**Office européen des brevets**

(11) Veröffentlichungsnummer: **0 249 012**

**A1**

# EUROPÄISCHE PATENTANMELDUNG

(21) Anmeldenummer: 87105695.8

(22) Anmeldetag: 16.04.87

(51) Int. Cl.4: **B60R 13/00** , B60J 7/10

(30) Priorität: 13.06.86 DE 3620002

(43) Veröffentlichungstag der Anmeldung:
16.12.87 Patentblatt 87/51

(84) Benannte Vertragsstaaten:
**DE ES FR GB IT**

(71) Anmelder: **AUDI AG**
**Postfach 220**
**D-8070 Ingolstadt(DE)**

(72) Erfinder: **Wagner, Friedemann**
**Bernd-Rosemeyer-Strasse 3**
**D-8071 Wettstetten(DE)**
Erfinder: **Krüger, Eckart, Dipl.-Ing.**
**Unteranger 26**
**D-8070 Ingolstadt(DE)**

(74) Vertreter: **Le Vrang, Klaus**
**AUDI AG Postfach 220 Patentabteilung**
**D-8070 Ingolstadt(DE)**

(54) Für Sonderzwecke einsetzbares Kraftfahrzeug, beispielsweise Polizeifahrzeug.

(57) Die Erfindung bezieht sich auf für Sonderzwecke einsetzbare Kraftfahrzeuge (2), beispielsweise Polizeifahrzeuge, mit auf dem Fahrzeugdach (1) angeordneten Aufbauten (5). Mit der Erfindung soll erreicht werden, daß die Festlegung des Verwendungszweckes eines solchen Kraftfahrzeuges (2) erst zu einem sehr späten Zeitpunkt getroffen werden muß. Darüber hinaus soll es auf besonders einfache Weise möglich sein, Umrüstarbeiten rasch und problemlos ausführen zu können.

Dies gelingt dadurch, daß die Aufbauten (5) auf einen, den Konturen des Fahrzeugdaches (1) in etwa angepaßten Deckel (4) montiert sind, der in einen im Fahrzeugdach (1) vorgesehenen Rahmen (3) für ein Schiebedach oder Schiebe-Hebedach eingesetzt und daran befestigt ist .

FIG 1

EP 0 249 012 A1

## Für Sonderzwecke einsetzbares Kraftfahrzeug, beispielsweise Polizeifahrzeug

Die Erfindung betrifft ein für Sonderzwecke einsetzbares Kraftfahrzeug, beispielsweise Polizeifahrzeug, gemäß Oberbegriff des Patentanspruches 1.

Nach der derzeit üblichen Vorgehensweise sind die dabei auf dem Fahrzeugdach angeordneten Aufbauten wie beispielsweise Rundumkennlicht, Lautsprecher oder eventuell auch eine zusätzliche Antenne auf dem eigens dafür mittels Versteifungsrippen verstärkten Außenblech des Fahrzeugdaches montiert. Zum Befestigen dieser Aufbauten ist es dabei erforderlich, entsprechende Bohrungen in das Fahrzeugdach einzubringen. Ebenso müssen Leitungen in den zwischen Außenblech und Himmel des Fahrgastraumes vorhandenen Hohlraum eingebracht werden, da in der Regel die Versorgung mit elektrischer Energie notwendig ist.

Aufgrund der Vielzahl der vorzusehenden Maßnahmen ist bereits bei der Herstellung des Kraftfahrzeuges dessen späterer Verwendungszweck zu beachten, so daß bereits zu einem sehr frühen Stadium die entsprechenden Vorbereitungen zu treffen sind.

Da insbesondere, wie bereits erwähnt, das Außenblech des mit den Aufbauten versehenen Fahrzeugdaches aus Festigkeitsgründen mit Versteifungsblechen versehen werden muß, gestalten sich Nachrüstarbeiten bei einem nicht eigens für diesen Zweck vorgesehenen Kraftfahrzeug äußerst - schwierig.

Soll nun ein so ausgestattetes Fahrzeug ggf. zu einem späteren Zeitpunkt wieder als Zivilfahrzeug Verwendung finden, so ergeben sich hierbei ebenfalls eine Vielzahl von Schwierigkeiten (Bohrungen in Fahrzeugdach).

Aus der DE-OS 33 07 244 ist nun ein Träger zur Aufnahme von vorzugsweise einem Schild, wie Reklame - oder Taxi-Schild bekannt geworden, der einen Bügel mit seitlich von einer Schiebedachöffnung aufzubringenden Fußabschnitten umfaßt. An dem Bügel selbst sind zumindest zwei innen, in gegenüberliegenden Abschnitten des Schiebedachrahmens einbringbare Halterungen angeordnet. Ferner ist im horizontal verlaufenden Bereich des Bügels ein gegenüber der dortigen Bügelbreite vergrößerter Abschnitt zur Aufnahme des Schildes vorgesehen. Damit kann auf einem ein Schiebedach aufweisenden Kraftfahrzeugdach unabhängig von seitlichen Regenrinnen ein Schild mittels eines Trägers befestigt werden.

Diese Einrichtung ist mit gewissen Nachteilen behaftet. So verschlechtert die aus Träger und Schild bestehende Funktionseinheit die Aerodynamik des Kraftfahrzeuges doch wesentlich. Weisen die Aufbauten einen gewissen Umfang auf, wie beispielsweise Rundumkennleuchte, Lautsprecher und Antenne für Polizeifahrzeuge, so wäre ein solcher Träger entsprechend zu gestalten und auch in der Weise zu befestigen, daß den bisweilen doch recht hohen Gewichtskräften und den während der Fahrt auftretenden zusätzlichen Beschleunigungskräften, die von den Aufbauten ausgehen, Rechnung getragen wird. Dies macht einen recht hohen konstruktiven Aufwand erforderlich.

Auch mit einer solchen Vorrichtung läßt es sich nicht umgehen, daß bereits bei der Herstellung des Kraftfahrzeuges dessen späterer Verwendungszweck zu beachten und entsprechend zu berücksichtigen ist, d. h. daß gegebenenfalls das Außenblech des Fahrzeugdaches aus Festigkeitsgründen mit Versteifungsblechen versehen werden muß. Nicht zu vergessen sind auch die in das Fahrzeugdach oder in den Schiebedachdeckel einzubringenden Bohrungen für die elektrischen Versorgungsleitungen. Daher wären auch bei einem solchen Fahrzeug entsprechende Umrüstarbeiten vonnöten, damit dieses gegebenenfalls zu einem späteren Zeitpunkt wieder als Zivilfahrzeug Verwendung finden könnte.

Davon ausgehend liegt der vorliegenden Erfindung die Aufgabe zugrunde, ein für Sonderzwecke einsetzbares Kraftfahrzeug mit einem oder mehreren auf dem Fahrzeugdach vorzusehenden Aufbauten derart zu gestalten, daß dabei die Festlegung des Verwendungszweckes erst zu einem sehr späten Zeitpunkt getroffen werden muß. Darüber hinaus soll es auf besonders einfache Weise möglich sein, Umrüstarbeiten rasch und problemlos ausführen zu können, so daß auch eine spätere Verwendung als Zivilfahrzeug wieder möglich ist.

Diese Aufgabe wird erfindungsgemäß mit einer Vorgehensweise gelöst, wie sie den Merkmalen des Patentanspruches 1 entnommen werden kann. Es ist damit möglich, ein Kraftfahrzeug jederzeit sowohl zu einem Sonderfahrzeug, als auch von einem solchen wieder zu einem Zivilfahrzeug umzurüsten. Dabei werden die Aufbauten zusammen mit dem sie tragenden und mit ihnen eine funktionelle Einheit bildenden Deckel einfach abgenommen, die elektrischen Leitungsverbindungen gelöst und stattdessen ein Schiebedach oder Schiebe-Hebedach in den Rahmen eingesetzt. Der Deckel, der in seinen Abmessungen denen eines Schiebedaches entspricht, ist sinnvollerweise bereits den erfoderlichen Versteifungsblechen versehen und weist auch die erforderliche Anzahl von Aufbauten-Montagebohrungen auf. In vorteilhafter Weise ist die Unteransicht des Deckels dem Himmel des Fahrgastraumes angepaßt, wobei die Deckelbefestigung außerdem derart gestaltet ist, daß damit auch eine Niveauregelierung möglich. ist, so daß eine exakte Anpassung an die Außenkontur des Fahrzeugdaches erfolgen kann.

Weitere vorteilhafte Konstruktionsmerkmale ergeben sich aus den Unteransprüchen sowie der nachstehenden Figurenbeschreibung, die eine vorteilhafte Ausführungsform aufzeigt. Die zugehörige Zeichnung zeigt dabei in

Fig. 1 eine perspektivische Darstellung eines erfindungsgemäß ausgestatteten Schiebedach-Deckels,

Fig. 2 eine Schnittdarstellung gemäß Pfeile II in Fig. 1 und

Fig. 3 eine Schnittdarstellung gemäß Pfeile III in Fig. 1

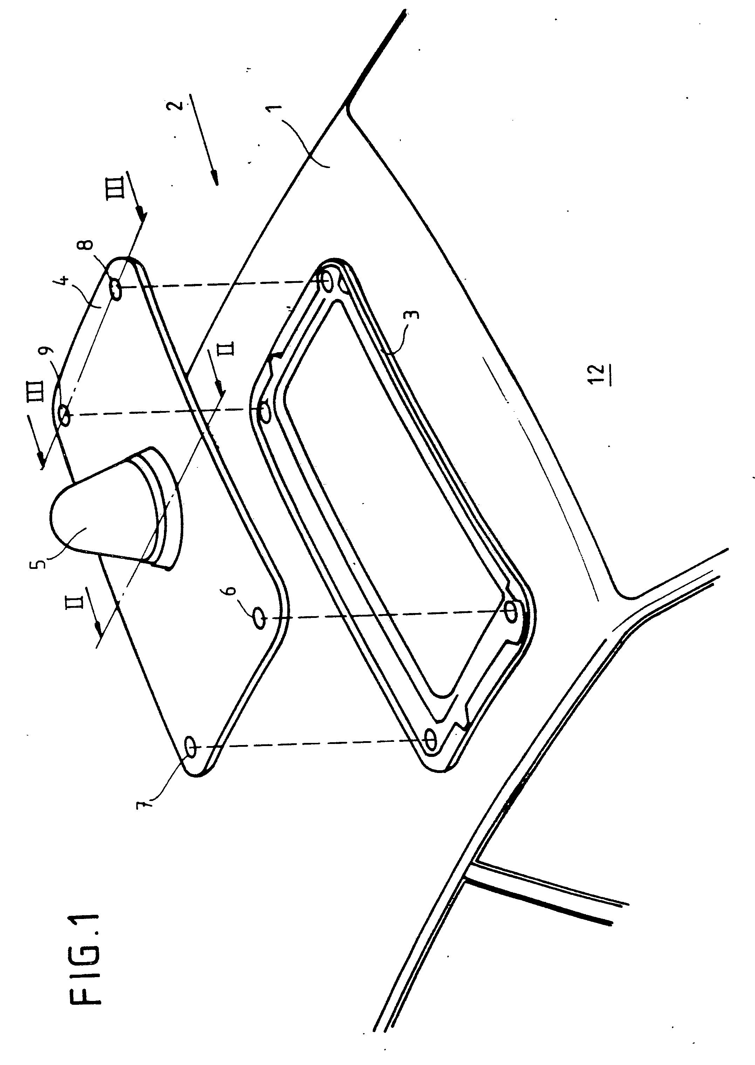

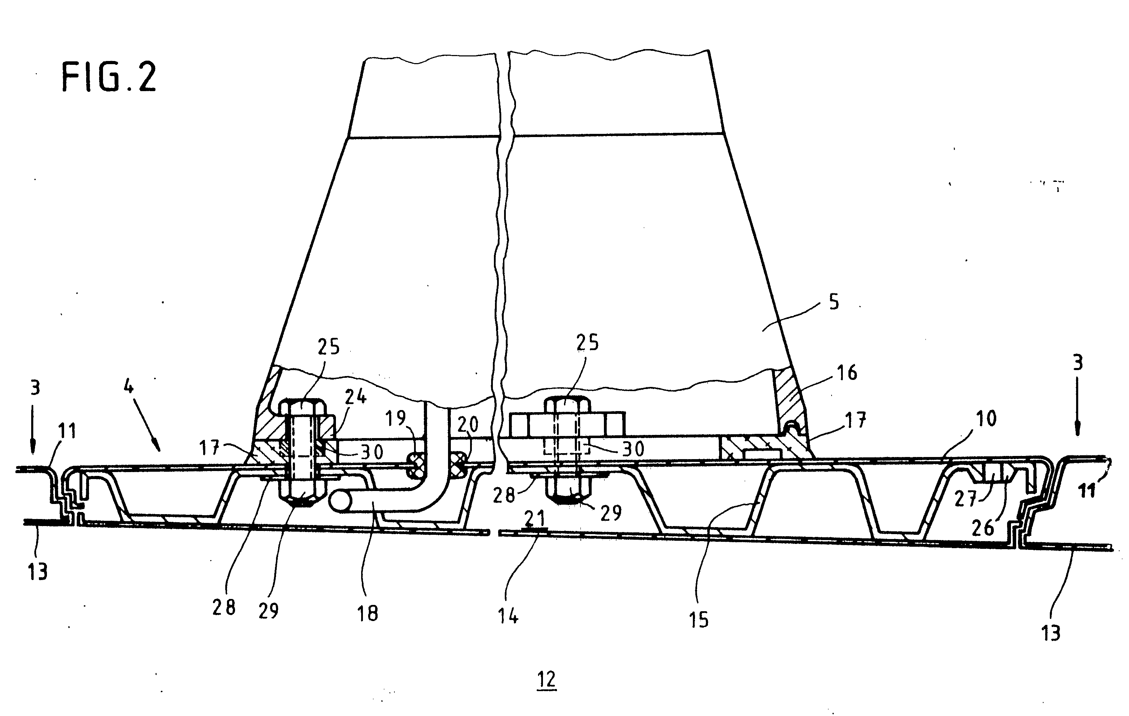

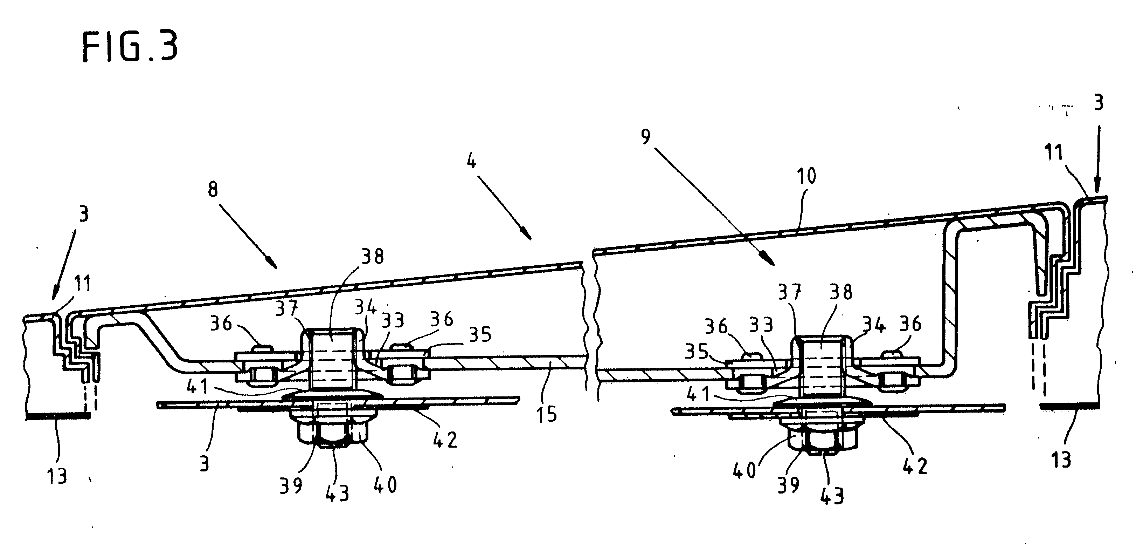

Die Figur 1 zeigt in perspektivischer Darstellung das Fahrzeugdach (1) eines Kraftfahrzeuges (2) mit einem eingesetzten Rahmen (3) für ein daran anzubringendes Schiebedach. Der Rahmen (3) kann dabei auch sämtliche Verstelleinrichtungen aufweisen, mit denen ein Schiebedach bewegt werden kann. Diese Verstelleinrichtungen sind hier allerdings nicht dargestellt. Auf den Rahmen (3) aufgesetzt ist nun anstatt eines Schiebedaches ein erfindungsgemäß ausgestalteter Deckel (4), der als Aufbau zur Nutzung des Kraftfahrzeuges (2) für Sonderzwecke, beispielsweise als Polizeifahrzeug, eine Rundumkennleuchte (5) trägt. Der Deckel (4) ist über vier Befestigungsstellen (6-9) mit dem Rahmen (3) verbunden. Nähere Einzelheiten gehen aus den Figuren 2 und 3 hervor.

Wie aus der Schnittdarstellung nach Fig. 2 entnehmbar ist, weist der Deckel (4) zunächst ein Dechblech (10) auf, welches farblich und in seinen äußeren Konturen zweckmäßigerweise einem Außenblech (11) des Fahrzeugdaches (1) angepaßt ist. Selbstverständlich sind auch die Abmessungen derart gewählt, daß sie den Abmessungen eines stattdessen aufzusetzenden Schiebedaches entsprechen, so daß sowohl bezüglich des äußeren Erscheinungsbildes als auch im Hinblick auf die Abdichtung gegen eindringende Feuchtigkeit keine Probleme auftauchen könner. Dem Fahrgastraum (12) zugewandt weist der Deckel (4) eine, einem Himmel (13) des Fahrzeugdaches (1) angepaßte Bespannung (14) auf. Zwischen Deckblech (10) und Bespannung (14) sind Versteifungsrippen (15) vorgesehen und mit dem Deckblech (10) verbunden, die die Formstabilität des Deckels (4) sicherstellen.

Auf das Deckblech (10) ist nun die bereits erwähnte Rundumkennleuchte (5) aufmontiert, deren Leuchtscheibe (16) an der unteren Kante eine umlaufende Dichtleiste (17) aufweist. Eine als Stromversorgung dienende Zuleitung (18) führt von der Rundumkennleuchte (5) über eine, mit einer Gummitülle (19) versehene Öffnung (20) des Deckbleches (10) in den durch die Versteifungsrippen (15) gebildeten Hohlraum (21). Von dort aus führt die Zuleitung (18) über eine eventuell vorzusehende Steckverbindung in einen Hohlraum des Fahrzeugdaches (1), um von dort aus an die entsprechenden Stellen der Fahrzeugelektrik geführt zu werden.

Über einen partiell abgewinkelten unteren Rand (24) der Rundumkennleuchte (5) ist diese mittels Schraubverbindung mit dem Deckel (4) verbunden. Hierzu sind drei, gleichmäßig (3 × 120°) über den Umfang verteilt angeordnete Sechskantschrauben (25) vorgesehen, die an den Stellen angeordnet sind, an denen die Versteifungsrippen (15) unmittelbar am Deckblech (10) anliegen, wobei diese bereits vorstehend erwähnte Verbindung beispielsweise mittels Metallkleber hergestellt sein kann. An den Angriffsstellen der Sechskantschrauben (25), sowie an weiteren, über den Deckel (4) verteilt angeordneten Stellen sind die Versteifungsrippen (15) mit einer Anzahl von Bohrungen (27) für weitere Befestigungsschrauben oder ähnliche Haltemittel für zusätzliche Aufbauten versehen. Die Versteifungsrippen (15) können an diesen Stellen Materialverdickungen (26) aufweisen.

Jede Sechskantschraube (25) ist jeweils durch entsprechende Bohrungen des abgewinkelten Randes (24), der Dichtleiste (17) und der Versteifungsrippen (15) hindurchgeführt, so daß an ihrem anderen Ende schließlich eine Scheibe (28) sowie eine Sicherungsmutter (29) den festen Halt der Rundumkennleuchte (5) sicherstellen können. In die Dichtleiste (17) ist im Bereich des Durchtrittes der Sechskantschraube (25) zusätzlich eine Buchse (30) eingesetzt.

In Fig. 3 schließlich ist die Befestigung des Deckels (4) an dem fest in das Fahrzeugdach (1) integrierten Rahmen (3) gezeigt. Dabei sind die bereits aus Fig. 1 entnehmbaren Befestigungsstellen (8,9) detaillierter dargestellt. Diese dienen dabei nicht lediglich der Befestigung an sich, sondern damit ist auch eine gewisse Niveauregulierung des Deckels (4) möglich, so daß dieser auf einfache Weise derart einstellbar ist, daß seine Randbereiche mit den Randbereichen des Rahmens (3) und somit auch mit der Oberfläche des Fahrzeugdaches (1) bündig abschließen können. Die gezeigten Befestigungsstellen (8, 9) sind im konstruktiven Aufbau identisch. In eine, dem Rahmen (3) zugewandte Horizontalfläche einer Versteifungsrippe (15) ist in eine Öffnung (33) eine Flanschmutter (34) eingesetzt, die über ein Unterlegblech (35) sowie über Hohlniete (36) fest mit der Versteifungsrippe (15) verbunden ist. In ein Gewinde (37) der Flanschmutter (34) greift eine Stellschraube (38) ein, die an ihrem anderen Ende ein weiteres Gewinde (39) trägt. Mit diesem wirkt sie mit einer Mutter (40) zusammen, welche unter Zuhilfenahme eines auf der gegenüberliegenden Seite des Rahmens (3) vorgesehenen Stützbleches (41) den Rahmen (3) samt einem an dieser Stelle eingefügten Verstärkungsblech (42) umgreift. Durch drehen der Stellschraube (38), beispielsweise mittels eines in einen Schlitz (43) einsetzenden Schraubendrehers,kann dann eine Niveauregelierung des Deckels (4) vorgenommen werden.

Bezüglich der Abdichtung des aufgesetzten Deckels (4) gegenüber dem Rahmen (3) gegen eindringende Feuchtigkeit kann ähnlich vorgegangen werden, wie beispielsweise bei einem aufzusetzenden Schiebedach oder Schiebe-Hebedach. Dieses ist nicht Gegenstand der Erfindung, so daß ein weiteres Eingehen hierauf sich erübrigt.

Die Erfindung ist selbstverständlich nicht auf die gezeigt Ausführungsform beschränkt, sondern umfaßt naturgemäß auch konstuktive Abwandlungen bei der Ausgestalung des Deckels (4), bei Art und Weise der Befestigung der vorzusehenden Aufbauten, wobei insbesondere deren Anordnung im einzelnen auf den Verwendungszweck des Kraftfahrzeuges (1) abzustimmen ist.

## Ansprüche

1. Für Sonderzwecke einsetzbares Kraftfahrzeug, beispielsweise Polizeifahrzeug, mit auf dem Fahrzeugdach angeordneten Aufbauten, wie beispielsweise Rundumkennleuchte, Lautsprecher oder dergleichen, **dadurch gekennzeichnet,** daß die Aufbauten (5) unmittelbar auf einen, den Konturen des Fahrzeugdaches (1) in etwa angepaßten und mit den Aufbauten (5) eine funktionelle Einheit bildenden Deckel (4) montiert sind, der in einen im Fahrzeugdach (1) vorgesehenen Rahmen (3) für ein Schiebedach oder Schiebe-Hebedach eingesetzt und daran befestigt ist.

2. Für Sonderzwecke einsetzbares Kraftfahrzeug nach Patentanspruch 1, **dadurch gekennzeichnet,** daß der Deckel (4) ein oberes Deckblech (10) und damit verbundene, Hohlräume (21) bildende Versteifungsrippen (15) aufweist, während dem Fahrgastraum (12) zugewandt, eine, einem Himmel (13) des Fahrzeugdaches (1) angepaßte Bespannung (14) vorgesehen ist.

3. Für Sonderzwecke einsetzbares Kraftfahrzeug nach Patentanspruch 2, **dadurch gekennzeichnet,** daß Deckblech (10) und Versteifungsrippen (15) mittels Metallkleber verbunden sind.

4. Für Sonderzwecke einsetzbares Kraftfahrzeug nach Patentanspruch 1, **dadurch gekennzeichnet,** daß der Deckel (4) über vorzugsweise gleichmäßig verteilt angeordnete Befestigungsstellen (6-9) am Rahmen (3) befestigt ist und die Befestigungsstellen (6-9) gleichzeitig der Niveauregelierung dienen.

5. Für Sonderzwecke einsetzbares Kraftfahrzeug nach Patentanspruch 4, **dadurch gekennzeichnet,** daß zur Deckelbefestigung an einer Versteifungsrippe (15) jeweils in eine öffnung (33) eine Flanschmutter (34) eingesetzt und mittels Unterlegblech (35) und Hohlniete (36) damit verbunden ist, -daß in ein Gewinde (37) der Flanschmutter (34) eine Stellschraube (38) eingreift, die an ihrem anderen Ende ein weiteres Gewinde (39) trägt und damit mit einer Mutter (40) zusammenwirkt, welche unter Zuhilfenahme eines auf der gegenüberliegenden Seite des Rahmens (3) vorgesehenen Stützbleches (41) den Rahmen (3) und ein an dieser Stelle eingefügtes Verstärkungsblech (42) umgreift.

6. Für Sonderzwecke einsetzbares Kraftfahrzeug nach Patentanspruch 2, **dadurch gekennzeichnet,** daß auf dem Deckel (4) eine Rundumkennleuchte (5) montiert ist, deren Leuchtscheibe (16) an ihrer unteren Kante eine umlaufende Dichtleiste (17) aufweist, wobei eine als Stromversorgung dienende Zuleitung (18) von der Rundumkennleuchte (5) über eine, mit einer Gummitülle (19) versehene öffnung (20) des Deckbleches (10) in einen durch die Versteifungsrippen (15) gebildeten Hohlraum (21) und von dort über eine Steckverbindung in einen Hohlraum des Fahrzeugdaches (1) mündet.

7. Für Sonderzwecke einsetzbares Kraftfahrzeug nach Patentanspruch 6, **dadurch gekennzeichnet,** daß die Rundumkennleuchte (5) über einen partiell abgewinkelten unteren Rand (24) mittels Schraubverbindungen mit dem Deckel (4) verbunden ist, wobei dabei vorzusehende vorzugsweise gleichmäßig über den Umfang verteilt angeordnete Sechskantschrauben (25) durch entsprechende Bohrungen des abgewinkelten Randes (24), der Dichtleiste (17) und der Versteifungsrippen (15) hindurchgeführt sind, so daß an ihrem anderen Ende über eine Scheibe (28) und eine Sicherungsmutter (29) die Befestigung der Rundumkennleuchte (5) erfolgt.

8. Für Sonderzwecke einsetzbares Kraftfahrzeug nach Patentanspruch 7, **dadurch gekennzeichnet,** daß an Angriffsstellen für Haltemittel von weiteren Aufbauten die Versteifungsrippen (15) mit vorgefertigten Bohrungen (27) versehen sind.

FIG.1

FIG.2

# FIG.3

0 249 012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 123 759 (JONES)<br>* Figur 6; Seite 2, Zeilen 59-65 * | 1 | B 60 R 13/00<br>B 60 J 7/10 |
| A | | 6 | |
| | --- | | |
| A | US-A-4 186 525 (CARVALHO)<br>* Spalte 3, Zeile 46 - Spalte 5, Zeile 2 * | 4,5 | |
| | --- | | |
| A | DE-U-8 217 293 (GLASER)<br>* Anspruch 2 * | 1 | |
| | ----- | | |

| RECHERCHIERTE SACHGEBIETE (Int. Cl.4) |
|---|
| B 60 J 7/00<br>B 60 R 13/00 |

Der vorliegende Recherchenbericht wurde für alle Patentansprüche erstellt.

| Recherchenort | Abschlußdatum der Recherche | Prüfer |
|---|---|---|
| BERLIN | 08-09-1987 | STANDRING M A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82